# EUROPEAN PATENT SPECIFICATION

(11) **EP 2 603 919 B1**
(45) Date of publication and mention of the grant of the patent: **19.09.2018**
(21) Application number: 11816142.1
(22) Date of filing: 09.08.2011
(51) Int. Cl.: H01B 1/04, B82Y 30/00

(54) **SPIN-CURRENT EFFECT IN CARBON COATED CONDUCTORS**
DREHSTROMEFFEKT IN CARBONBESCHICHTETEN LEITERN
EFFET DE COURANT DE SPIN DANS DES CONDUCTEURS REVÊTUS DE CARBONE

(30) Priority: 09.08.2010 FI 20105841
(43) Date of publication of application: 19.06.2013
(73) Proprietor: Spindeco Technologies Oy, 70500 Kuopio (FI)
(72) Inventor: KOLJONEN, Petteri, FI-70100 Kuopio (FI); SAASTAMOINEN, Pekka, FI-93601 Kuusamo (FI)
(74) Representative: Papula Oy
(86) International application number: PCT/FI2011/050700
(87) International publication number: WO 2012/020167

(56) References cited:
- WO-A1-2011/012150
- JP-A- 2007 042 355
- JP-A- 2007 157 372
- JP-A- 2009 021 038
- KR-B1- 100 825 836
- US-A1- 2004 151 835
- US-A1- 2008 251 270

## Description

### FIELD OF THE INVENTION

The invention relates in general to the fields of physics and electrical engineering and more specifically to magnetoelectronics, referred to as spintronics in the last few years. Spintronics utilizes one of the quantal properties of electrons, namely spin.

### BACKGROUND OF THE INVENTION

In quantum mechanics, spin means a characteristic feature of elementary particles, analogously corresponding to the angular momentum, i.e. the momentum of momentum, in classical mechanics. Spin is a quantized quantity in the sense that the quantum number "s" representing the spin may be either an integer or a half-integer. More precisely, the spin of fermions (such as electrons, protons and neutrons) is a half-integer and the spin of bosons (such as photons) is an integer. For example, the spin of electrons may exist in two different states; it is either -1/2 or +1/2. Bosons are elementary particles following the Bose-Einstein statistics, and fermions, in turn, follow the Fermi-Dirac statistics and also the Pauli exclusion principle. In simple terms, the spin can be considered as meaning the rotary movement of elementary particles about a specific axis of rotation.

Spintronics means technologies generally utilizing the spin of electrons as well as the electric charge in their processing, this way making possible to control the electrons, i.e. to control the electric currents, in a desired manner. Spin polarization, in turn, means manipulation of the electron current so as to align the spins of the electrons. This way, in simplified terms, a set of electrons rotating about the same axis is provided, one analogy of which is coherent laser light. If the electric current is formed by the movement of electrons manipulated in this manner, it could be stated that the current is so-called spin current. Such a current propagates practically free of losses nearly at the speed of light, in distinction to the traditional current formed by charge carriers.

Most generally, spintronics is utilized with the so-called thin film techniques. One example of such a thin film technique utilizing the spin effect of electrons is the so-called GMR ("Giant magnetoresistance"). It is based on alternating the layers of ferromagnetic metals magnetized in different directions and non-ferromagnetic metals. The effect utilizes the spin characteristic of electrons on the basis of the fact that the electrons with a spin that is aligned with the magnetic field of a magnetic conductor scatter differently than the electrons having an opposite spin. It depends on the conductor, which type of the electrons scatter more. At the simplest, the GMR effect can be constructed with three material layers having two ferromagnetic layers magnetized in opposite directions and a non-ferromagnetic layer therebetween. In this case, the electrons provided with a specific spin scatter in the first layer and the electrons provided with a specific second spin scatter further in the third layer. From this it follows that the resistance of the structure becomes very strong. The GMR technique is utilized e.g. in hard disk readers of the computer.

Publication Murakami, Nagaosa, Zhang: "Dissipationless Quantum Spin Current at Room Temperature", Science, Vol. 301, published on 7 August 2003, describes the spin-current effect at room temperature. Murakami discusses theoretically the development of spin current at room temperature and in specific semi-conductors such as silicon, germanium and gallium arsenide.

The so-called spin Hall effect means accumulation of electrons moving in a semi-conductor on different sides of the semi-conductor sample in such a way that the spins of opposite signs accumulate on different edges of the semi-conductor a bit like in the classical Hall effect. This effect can develop without external magnetic field. On the other hand, an already generated spin Hall effect can be eliminated by a strong external magnetic field. In addition to semi-conductors, the effect has lately been also observed with metals.

In the prior art, spin currents have also been generated by using a rotary magnetic field that can be generated without a developing current formed by charge carriers. The spin current can be generated by using a separate voltage in this situation. This way, for example a so-called spin field effect transistor can be generated, see publication Guo et al.: "Quantum spin field effect transistor", Phys. Rev. B 67, 092408, published 31 March 2003.

One way of generating strong spin currents in silicon is presented in publication "Electrical injection and detection of spin-polarized carriers in silicon in a lateral transport geometry", Applied Physics Letter, Vol. 91, issue 21, November 2007. In the publication, silicon is provided with contacts for feed and detection, which are magnetized with magnetic fields perpendicular to each other. As a final result, a channel containing purely spin current instead of charge current is formed in silicon.

The main problem of the prior art in generating spin currents is that they require an external manner or source to produce the spin current. Typically, these include different spin pump arrangements (which can be considered, in a broad sense, as a counterpart for an accumulator in spintronics) and for example the use of external magnetic and/or electric fields in controlling the spins.

### OBJECTIVE OF THE INVENTION

The objective of the invention is to disclose a new type of a manner to generate spin currents in metal conductors. In particular, the objective of the invention is to produce this effect without complicated external arrangements, and it is broadly applicable to different applications.

### SUMMARY OF THE INVENTION

The invention relates to a method for generating a spin current in an electric conductor. The method is characterized in that the electric conductor is coated with a carbon layer, the thickness of which is smaller than the diameter of the conductor material; and an electric current is set to propagate in the electric conductor, whereby the spin current is formed in the environment of the interface between the electric conductor material and carbon.

The invention also relates to a system for generating a spin-current effect, the system comprising at least one electric conductor. The system is characterized in that the system further comprises a carbon layer around the conductor material of the electric conductor, the thickness of the carbon layer being smaller than the diameter of the conductor material; and a current source, setting an electric current to propagate in the electric conductor, whereby the spin current is formed in the environment of the interface between the electric conductor material and carbon.

The invention also relates to an electric conductor for generating a spin-current effect. The electric conductor is characterized in that the electric conductor additionally comprises a carbon layer around the conductor material, the thickness of the carbon layer being smaller than the diameter of the conductor material.

In one embodiment of the invention the material of the electric conductor is copper.

In one embodiment of the invention the carbon layer to be used in the method comprises graphene or a carbon nanotube structure. In this case, in the electric conductor or system according to the invention, the carbon layer around the conductor material is formed for example from graphene, one or more interlinked carbon nanotube mats formed by carbon nanotubes or a network formed by carbon nanotubes. The carbon nanotubes may also be functionalized with different compounds.

In one embodiment of the invention the thickness of the layer to be coated is between 10 nm and 100 µm.

In one embodiment of the invention the electric conductor to be coated is a conductor on a printed circuit board, a conductor in the internal circuitry of a component, a conductor between different parts of a device or a conductor between different devices.

In one embodiment of the invention the material of the electric conductor is metal or a semi-conductor enabling the movement of charge carriers.

The invention has numerous advantages. The coating material reinforces diamagnetism of the conductor, preventing the coupling of external magnetic interferences with the conductor signal. Also, the self-inductance generated by the conductor current and caused by its own magnetic field and the effect thereof on the actual signal are reduced by the coating. When interferences coupling to the signal are reduced, it improves directly the quality of the detected signal at the receiver end.

In practice, the most significant advantage of the invention is that the spin-current effect provided by signal conductors coated according to the invention enables faster signal transmission, better quality of the signal at the receiver end in a wide variety of different applications, smaller losses in different circuit solutions and for example better sound quality in audio device applications. In general terms, the advantage of the invention is that the spin current can be generated by a fairly simple structural modification without great expenses, and the application of the invention covers potentially all technical areas where spintronics is utilized.

The above-mentioned applications and embodiments of the invention can be used together in an arbitrary combination. Several applications or embodiments of the invention can be combined to produce a new application, i.e. embodiment, of the invention. The electric conductor, system or method may comprise one or more of the above-mentioned embodiments.

### LIST OF FIGURES

Fig. 1A represents an electric conductor in one embodiment of the invention,
Fig. 1B represents a cross-section of an electric conductor in one embodiment of the invention,
Fig. 1C represents a cable being further formed by two conductors connected by a plastic sheath in one embodiment of the invention,
Fig. 1D represents a connecting wire comprising thirty slightly twisted carbon coated conductors in one embodiment of the invention,
Fig. 1E represents a winding wire in one embodiment of the invention,
Fig. 2 shows the curves representing the impedances of a coated and uncoated copper conductor as a function of frequency, and
Fig. 3 shows, as a flow chart, the method of manufacturing the electric conductors according to the present invention.

### DETAILED DESCRIPTION OF THE INVENTION

Next, the present invention will be described with different embodiments. In this connection, reference is made to the accompanying drawings.

The present invention introduces a new manner to generate a spin current in signal conductors, and the effect is principally possible in all applications where charge carriers, i.e. electrons, move in a conducting material. Traditionally, speaking of electric current, the current is formed by a charge current formed by electric charges of charge carriers, only observing the mass and electric charge of the electron. In the invention, the particle model is also accompanied by an essential quantum mechanical property of the electron, i.e. the spin. In the normal current formed by charge carriers, the spin of electrons may be present in two different states, and it can be described, in a simplified manner, that the spin is oriented either up or down.

One of the advantages of the invention is to be able to improve the quality of the signal propagating in conductors or detected at a terminal device by the conductor coating solution according to the invention. One of the further advantages of the invention is based on the observation that the above-mentioned coating solution specifically provides a spin current in the conductors, this being verifiable by measurements. On this account, the application range of the present invention encompasses the generation of spin currents for a freely selectable application by means of a simple conductor coating procedure.

In the present invention, the structure of the electric conductor and, thereby, the physical and electric properties of the conductor are modified by coating the metal conductor with a thin carbon layer. The electric conductor may, in one generally used application, be made of copper, but also any other metal applicable as an electric conductor can be used. If the conductor is made of copper, a thin carbon layer is manufactured in the invention on top of the copper, whereby an interface of copper and carbon having the shape of a cylindrical surface is formed on the conductor.

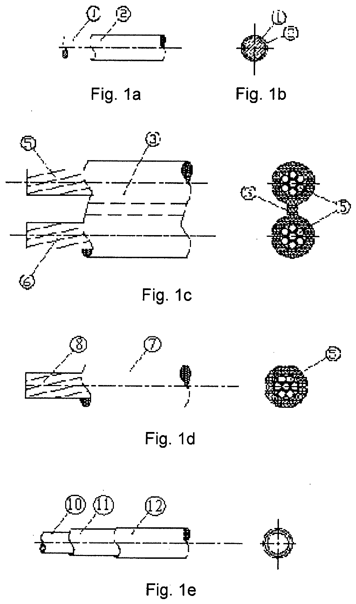

Figures 1A to 1E illustrate different cross-sectional views of the electric conductor and different conductor structures formed by several conductors according to the principle of the invention.

Fig. 1A represents an electric conductor in one embodiment of the invention. Fig. 1A depicts a metallic basic conductor 1 made for example of copper. The basic conductor has a diameter of for example 0,1 to 1,5 millimeters. The basic conductor 1 is coated with a carbon coating 2, the thickness of which may vary between 10 nm and 0,1 mm. The basic conductor 1 is for example made of an uncoated copper wire having a diameter of 0,25 mm, and the carbon coating (2) is 0,1 mm thick. The direct-current resistance is 0,34 ohm/m. Fig. 1B represents a cross section of the conductor of Fig. 1A.

Fig. 1C represents a cable further being formed by two wires, namely wires 5 and 6. In the solution according to Fig. 1C, fifteen carbon coated conductors according to Figures 1A and 1B, such as conductor 2 in Fig. 1A, are bundled in each wire 5 and 6. Two such wires are bound together by a plastic sheath 3, thereby obtaining for example a cable suitable for loudspeaker use. The plastic sheath 3 is an insulator sheath, for example a PVC, Teflon or other sheath, the thickness of which may be 0,5 mm to 2,0 mm.

Fig. 1D represents a connecting wire 7 comprising thirty slightly twisted carbon coated conductors 8 according to Fig. 1A. The ascent of the connecting wire is 40 mm/turn. The cover is made of PVC plastic having a thickness of for example 0,5 mm. The resistance is typically 0,01 ohm/m. The connecting wire of Fig. 1D corresponds to a traditional 1,5 mm² connecting wire.

Fig. 1E represents a winding wire. The basic conductor 10 of the winding wire is uncoated and approximately 1 mm thick in diameter. The basic conductor is coated with a carbon coating 11, the thickness of which is for example 0,1 mm. The carbon coated basic conductor is additionally coated with an insulator coating 12, for example a polyesterimide enamel, forming an insulator coating having a thickness of for example 0,15 mm. The thickness of the insulator coating may vary between 0,1 and 0,5 mm.

In the case of a multithread signal wire, it is advantageous to coat each individual signal conductor with a thin carbon coating or the like before manufacturing the sheath onto the structure.

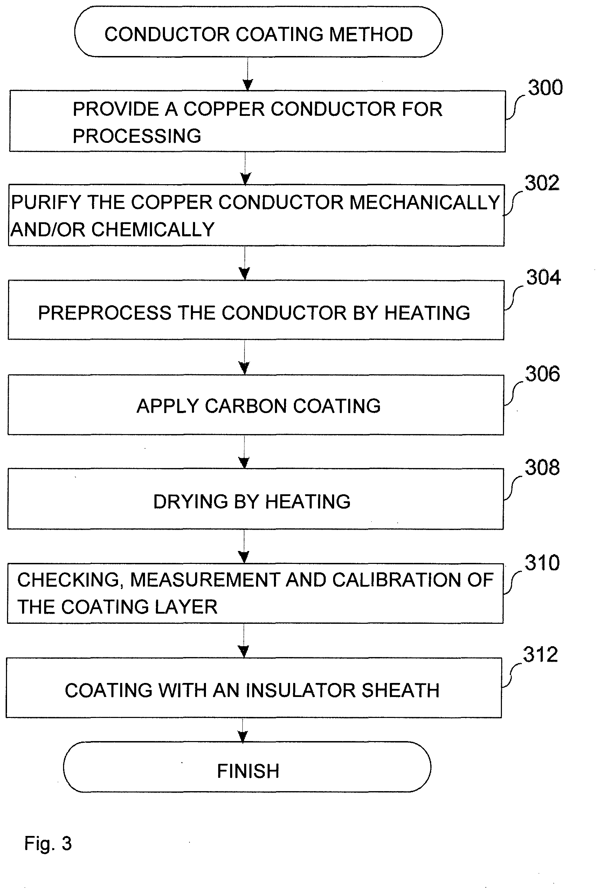

Fig. 3 illustrates the conductor coating method in one embodiment of the invention.

In step 300, an uncoated copper conductor is provided for processing. The copper conductor may have an arbitrary length or shape.

In step 302, the copper conductor is purified chemically and/or mechanically.

In step 304, the purified copper conductor is preprocessed by heating.

In step 306, application of the carbon coating material on the surface of the conductor is performed.

In step 308, the carbon coated conductor is dried by heating.

In step 310, the coating layer is checked, measured and calibrated.

In step 312, the carbon coated conductor is coated with an insulator sheath.

In one embodiment of the invention, the pure carbon as coating material is replaced by graphene that is an sp² hybridized form of carbon atoms set in a single planar layer. In another embodiment, the employed coating material comprises carbon nanotubes or networks formed thereby, which can be considered as a coiled-up structure of the above-mentioned graphene. The length of a carbon nanotube may be very large relative to the diameter, even of the order of one millimeter. There are single-layered (SWNT) and multilayered (MWNT) structures of carbon nanotubes. Carbon nanotubes belong to the group of fullerenes and they possess particular properties. For example, in terms of electrical conductivity, the carbon nanotubes allow up to a 1000-fold greater conductivity as compared to typical metals such as copper.

In one embodiment of the invention, the thickness of the carbon layer to be manufactured on the surface of the conductor is 10 nm to 100 µm. In this case, the diameter of the metallic basic conductor, for example made of copper, is between 100 µm and 1,5 mm. An insulator sheath is manufactured around the coated conductor for example from Teflon or PVC, typically in a thickness of 0,5 to 2,0 mm. The thickness of the carbon layer depends on the application used and particularly on the magnitude of the electric current propagating in the conductor. The thickness of the coating needed for a conductor transmitting a greater electric current is larger. In turn, the thickness of the insulator layer is only influenced by the requirements of basic electrical engineering: the breakdown insulation capability, mechanical strength etc.

The conductor coating technique according to the present invention can be applied, in addition to the circuitry between different devices and components, to the internal circuitry and wiring of devices and components. The coating idea is also suitable, in addition to individual conductors and bundles formed by several conductor threads, for example to the wiring of conductors in printed circuit boards. The invention is therefore applicable to all such applications where electric current, i.e. charge carriers, is present in a suitable medium.

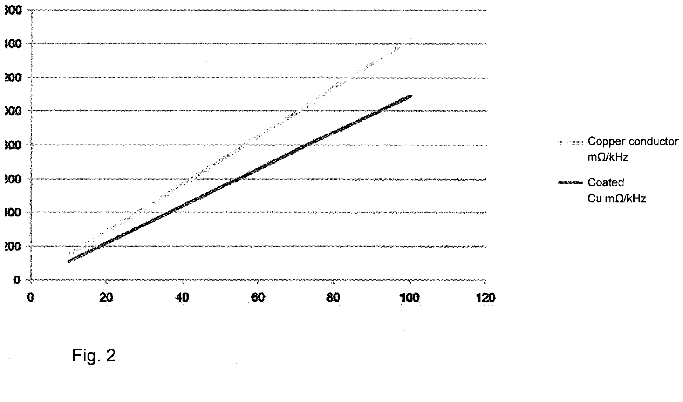

The electrical properties of a conductor coated in the manner according to the present invention are considerably changed. Fig. 2 illustrates results of impedance measurements for a conductor as a function of frequency between 10 and 100 kHz for an original pure copper conductor as well as a copper conductor coated with carbon according to the invention. The measurement conductor of the example of Fig. 2 is a copper conductor having a standard cross-sectional surface area of 2,5 mm². The horizontal axis represents frequency in kilohertz and the vertical axis represents impedance in milliohms. As seen by the curves, the impedance increases nearly linearly as a function of frequency. The upper one of the curves of Fig. 2 represents the impedance of the copper conductor before coating treatment, whereas the lower curve represents the impedance of the copper conductor coated with a carbon layer. From the measurement it was discovered that the impedance decreases over the entire measured frequency band by 22,3 percent on the average, in comparing the copper conductor coated with carbon with the uncoated one.

The coating solution of the invention thus enables the generation of the so-called spin current. The consequence of the so-called skin effect is that the electrons tend to move to propagate in the surface portion of the conductor material instead of the interior portions. In turn, the interface of metal and carbon makes the electrons propagating in the area of the interface polarize in such a way that the spins thereof become considerably aligned. It can be stated that, in this case, a coherent set of electrons aligned in terms of their magnetic axis moves in the interface of the conductor and in the immediate environment of the interface. The electrical conductivity of such a conductor is considerably improved and the losses, in turn, are reduced; in this case, it can be stated that a so-called spin current propagates in the conductor. The effect is, for example, observable in that the loss of the coated conductor in a length unit is reduced and the transfer rate of the conductor is increased.

The consequence of the spin-current effect is that the efficiency of an apparatus or a system including coated conductors is improved. In the application area of sound reproduction equipment, a clear improvement in sound quality is observed in the case where, for example, the circuitry between the output amplifier and loudspeakers is implemented with the coated conductors. In the television sector, the picture quality of the broadcast signal is clearly improved in terms of sharpness and contrast in the case where the coating idea of the invention is utilized in signal cables between the antenna connector and the receiver. In battery-driven devices, quickening and improvement of the functioning has been observed in the case where the coating technique of the present invention has been applied to chargers.

In general terms, the application of the invention encompasses different areas of electronics, where the coating arrangement according to the present invention enables increase in the coupling rate of electronic circuits and, in addition, the component density of the circuit boards can be raised, if necessary, because the internal power consumption of the circuit due to losses is reduced. On that account, the operation of the circuits also becomes generally quicker and delays associated to signaling are reduced.

The inventive idea of the present invention also includes the corresponding signal conductor coating method to enable the spin currents in the manner illustrated in the flow chart.

The above-mentioned applications and embodiments of the invention can be used together in an arbitrary combination. Several applications or embodiments of the invention can be combined to produce a new application, i.e. embodiment, of the invention. The electric conductor, system or method may comprise one or more of the above-mentioned embodiments.

## Claims

1. An electric conductor for generating a spin-current effect, **characterized in that** the electric conductor further comprises a carbon layer (2, 11) coated on an electric conductor material (1, 10), the thickness of the carbon layer (2, 11) being smaller than the diameter of the conductor material (1, 10).

2. The electric conductor according to claim 1, **characterized in that** the material of the electric conductor (1, 10) is copper.

3. The electric conductor according to claims 1 to 2, **characterized in that** the carbon layer (2, 11) around the electric conductor material is formed from graphene, one or more interlinked carbon nanotube mats formed by carbon nanotubes or a network formed by carbon nanotubes.

4. The electric conductor according to claims 1 to 3, **characterized in that** the thickness of the carbon layer (2, 11) is between 10 nm and 100 µm.

5. The electric conductor according to claims 1 to 4, **characterized in that** the electric conductor (1, 10) is a conductor on a printed circuit board, a conductor in the internal circuitry of a component, a conductor between different parts of a device or a conductor between different devices.

6. The electric conductor according to claims 1 to 5, **characterized in that** the material of the electric conductor (1, 10) is metal or a semi-conductor enabling the movement of charge carriers.

7. A system for generating a spin-current effect, the system comprising:
at least one electric conductor according to any of the claims 1 - 6; and
a current source, setting an electric current to propagate in the at least one electric conductor, whereby the spin current is formed in the environment of the interface between the electric conductor material (1, 10) and carbon (2, 11).

8. A method for coating an electric conductor, **characterized in that** the method comprises the steps:
providing (300) an uncoated electric conductor (1, 10) for processing;
purifying (302) the uncoated electric conductor (1, 10) chemically and/or mechanically;
preprocessing (304) the purified electric conductor by heating;
applying (306) carbon coating material (2, 11) on a surface of the preprocessed purified electric conductor;
drying (308) the carbon coated conductor by heating;
checking (310) a coating layer of the conductor;
measuring (310) the coating layer of the conductor;
calibrating (310) the coating layer of the conductor; and
coating (312) the carbon coated conductor with an insulator sheath.

9. The method according to claim 8, **characterized in that** material of the electric conductor (1, 10) is copper.

10. The method according to claims 8 to 9, **characterized in that** the carbon layer (2, 11) to be used in the method comprises graphene or a carbon nanotube structure.

11. The method according to claims 8 to 10, **characterized in that** the thickness of the layer (2, 11) to be coated is between 10 nm and 100 µm.

12. The method according to claims 8 to 11, **characterized in that** the electric conductor (1, 10) to be coated is a conductor on a printed circuit board, a conductor in the internal circuitry of a component, a conductor between different parts of a device or a conductor between different devices.

13. The method according to claims 8 to 12, **characterized in that** material of the electric conductor (1, 10) is metal or a semi-conductor enabling the movement of charge carriers.

## Patentansprüche

1. Elektrischer Leiter zum Erzeugen eines Drehstrom-Effekts, **dadurch gekennzeichnet, dass** der elektrische Leiter ferner eine Kohlenstoffschicht (2, 11) aufweist, die auf ein elektrisches Leitermaterial (1, 10) aufgebracht ist, wobei die Dicke der Kohlenstoffschicht (2, 11) kleiner als der Durchmesser des Leitermaterials (1, 10) ist.

2. Elektrischer Leiter nach Anspruch 1, **dadurch gekennzeichnet, dass** das Material des elektrischen Leiters (1, 10) Kupfer ist.

3. Elektrischer Leiter nach den Ansprüchen 1 bis 2, **dadurch gekennzeichnet, dass** die Kohlenstoffschicht (2, 11) um das elektrische Leitermaterial aus Graphen, einer oder mehreren miteinander verbundenen Kohlenstoff-Nanoröhrchen-Matten, die durch Kohlenstoff-Nanoröhren gebildet ist, oder einem durch Kohlenstoff gebildeten Netzwerk gebildet ist.

4. Elektrischer Leiter nach den Ansprüchen 1 bis 3, **dadurch gekennzeichnet, dass** die Dicke der Kohlenstoffschicht (2, 11) zwischen 10 nm und 100 µm beträgt.

5. Elektrischer Leiter nach den Ansprüchen 1 bis 4, **dadurch gekennzeichnet, dass** der elektrische Leiter (1, 10) ein Leiter auf einer Leiterplatte, ein Leiter in der internen Schaltung eines Bauelements, ein Leiter zwischen verschiedenen Teilen eines Geräts oder ein Leiter zwischen verschiedenen Geräten ist.

6. Elektrischer Leiter nach den Ansprüchen 1 bis 5, **dadurch gekennzeichnet, dass** das Material des elektrischen Leiters (1, 10) Metall oder ein Halbleiter ist, der die Bewegung von Ladungsträgern ermöglicht.

7. System zum Erzeugen eines Drehstrom-Effekts, wobei das System umfasst:
mindestens ein elektrischer Leiter nach einem der Ansprüche 1 bis 6; und
eine Stromquelle, die einen elektrischen Strom einstellt, um sich in dem mindestens einen elektrischen Leiter auszubreiten,
wobei der Spinstrom in der Umgebung der Grenzfläche zwischen dem elektrischen Leitermaterial (1, 10) und Kohlenstoff (2, 11) gebildet wird.

8. Verfahren zum Beschichten eines elektrischen Leiters, **dadurch gekennzeichnet, dass** das Verfahren die folgenden Schritte umfasst:
Bereitstellen (300) eines unbeschichteten elektrischen Leiters (1, 10) zum Verarbeiten;
Chemisches und/oder mechanisches Reinigen (302) des unbeschichteten elektrischen Leiters (1,10);
Vorbehandeln (304) des gereinigten elektrischen Leiters durch Erwärmen;
Aufbringen (306) eines Kohlenstoffbeschichtungsmaterials (2, 11) auf einer Oberfläche des vorbehandelten, gereinigten elektrischen Leiters;
Trocknen (308) des mit Kohlenstoff beschichteten Leiters durch Erhitzen;
Prüfen (310) einer Überzugsschicht des Leiters;
Messen (310) der Überzugsschicht des Leiters;
Kalibrieren (310) der Überzugsschicht des Leiters; und
Beschichten (312) des mit Kohlenstoff beschichteten Leiters mit einer Isolatorhülle.

9. Verfahren nach Anspruch 8, **dadurch gekennzeichnet, dass** Material des elektrischen Leiters (1, 10) Kupfer ist.

10. Verfahren nach den Ansprüchen 8 bis 9, **dadurch gekennzeichnet, dass** die in dem Verfahren zu verwendende Kohlenstoffschicht (2, 11) Graphen oder eine Kohlenstoff-Nanoröhren-Struktur umfasst.

11. Verfahren nach den Ansprüchen 8 bis 10, **dadurch gekennzeichnet, dass** die Dicke der zu beschichtenden Schicht (2, 11) zwischen 10 nm und 100 µm liegt.

12. Verfahren nach den Ansprüchen 8 bis 11, **dadurch gekennzeichnet, dass** der zu beschichtende elektrische Leiter (1, 10) ein Leiter auf einer Leiterplatte, ein Leiter in der internen Schaltung eines Bauelements, ein Leiter zwischen verschiedenen Teilen eines Geräts oder ein Leiter zwischen verschiedenen Geräten ist.

13. Verfahren nach den Ansprüchen 8 bis 12, **dadurch gekennzeichnet, dass** das Material des elektrischen Leiters (1, 10) Metall oder ein Halbleiter ist, der die Bewegung von Ladungsträgern ermöglicht.

## Revendications

1. Conducteur électrique pour produire un effet de courant de spin, **caractérisé en ce que** le conducteur électrique comprend en outre une couche de carbone (2, 11) revêtue sur une matière de conducteur électrique (1, 10), l'épaisseur de la couche de carbone (2, 11) étant plus petite que le diamètre de la matière de conducteur (1, 10).

2. Conducteur électrique selon la revendication 1, **caractérisé en ce que** la matière du conducteur électrique (1, 10) est du cuivre.

3. Conducteur électrique selon les revendications 1 à 2, **caractérisé en ce que** la couche de carbone (2, 11) autour de la matière de conducteur électrique est formée de graphène, une ou plusieurs nattes de nanotube de carbone entrelacées formées par des nanotubes de carbone ou un réseau formé par des nanotubes de carbone.

4. Conducteur électrique selon les revendications 1 à 3, **caractérisé en ce que** l'épaisseur de la couche de carbone (2, 11) fait entre 10 nm et 100 µm.

5. Conducteur électrique selon les revendications 1 à 4, **caractérisé en ce que** le conducteur électrique (1, 10) est un conducteur sur une carte à circuit imprimé, un conducteur dans les circuits internes d'un composant, un conducteur entre des parties différentes d'un dispositif ou un conducteur entre des dispositifs différents.

6. Conducteur électrique selon les revendications 1 à 5, **caractérisé en ce que** la matière du conducteur électrique (1, 10) est du métal ou un semi-conducteur permettant le mouvement de porteurs de charge.

7. Système pour produire un effet de courant de spin, le système comprenant :
au moins un conducteur électrique selon l'une quelconque des revendications 1 à 6 ; et
une source de courant, paramétrant un courant électrique pour se propager dans l'au moins un conducteur électrique,
de sorte que le courant de spin est formé dans l'environnement de l'interface entre la matière de conducteur électrique (1, 10) et le carbone (2, 11).

8. Procédé pour le revêtement d'un conducteur électrique, **caractérisé en ce que** le procédé comprend les étapes de :
fourniture (300) d'un conducteur électrique non revêtu (1, 10) pour traitement ;
purification (302) chimique et/ou mécanique du conducteur électrique non revêtu (1, 10) ;
prétraitement (304) du conducteur électrique purifié par chauffage ;
application (306) d'une matière de revêtement de carbone (2, 11) sur une surface du conducteur électrique purifié prétraité ;
séchage (308) du conducteur revêtu de carbone par chauffage ;
vérification (310) d'une couche de revêtement du conducteur ;
mesure (310) de la couche de revêtement du conducteur ;
étalonnage (310) de la couche de revêtement du conducteur ; et
revêtement (312) du conducteur revêtu de carbone par une gaine isolante.

9. Procédé selon la revendication 8, **caractérisé en ce que** la matière du conducteur électrique (1, 10) est du cuivre.

10. Procédé selon les revendications 8 à 9, **caractérisé en ce que** la couche de carbone (2, 11) à utiliser dans le procédé comprend du graphène ou une structure de nanotube de carbone.

11. Procédé selon les revendications 8 à 10, **caractérisé en ce que** l'épaisseur de la couche (2, 11) à revêtir fait entre 10 nm et 100 µm.

12. Procédé selon les revendications 8 à 11, **caractérisé en ce que** le conducteur électrique (1, 10) à revêtir est un conducteur sur une carte à circuit imprimé, un conducteur dans les circuits internes d'un composant, un conducteur entre des parties différentes d'un dispositif ou un conducteur entre des dispositifs différents.

13. Procédé selon les revendications 8 à 12, **caractérisé en ce que** la matière du conducteur électrique (1, 10) est du métal ou un semi-conducteur permettant le mouvement de porteurs de charge.
